# EUROPÄISCHE PATENTSCHRIFT

(11) **EP 0 481 236 B1**
(45) Veröffentlichungstag und Bekanntmachung des Hinweises auf die Patenterteilung: **19.04.1995**
(21) Anmeldenummer: 91115916.8
(22) Anmeldetag: 19.09.1991
(51) Int. Cl.: F16C 33/04, F16C 17/04, F16B 4/00, B23P 11/02

(54) **Formteil aus einem metallischen und einem keramischen Körper**
Article comprising a metallic element and a ceramic element
Pièce formée d'un élément en métal et d'un élément en céramique

(30) Priorität: 16.10.1990 DE 4032803
(43) Veröffentlichungstag der Anmeldung: 22.04.1992
(73) Patentinhaber: Seibig, Bernd, D-21502 Geesthacht (DE)
(72) Erfinder: Seibig, Bernd, D-21502 Geesthacht (DE)
(74) Vertreter: Niedmers, Ole, Dipl.-Phys.

(56) Entgegenhaltungen:
- EP-A- 0 197 890
- EP-A- 0 242 516
- GB-A- 2 216 975

## Beschreibung

Die Erfindung betrifft ein Formteil, umfassend einen metallischen Körper und einen keramischen Körper, die mittels Wärmebehandlung kraftschlüssig miteinander verbunden sind, wobei vor der Schaffung der kraftschlüssigen Verbindung wenigstens der metallische Körper erwärmt wird und der metallische Körper einen durch einen in die äußere Körperkontur begrenzenden, vom Körper im wesentlichen rechtwinklig wegstehenden ersten Steg aufweißt, der eine Öffnung zur Aufnahme des keramischen Körpers begrenzt.

Ein Formteil dieser Art ist bekannt (EP-A-0 197 890). Aus diesem vorveröffentlichten Dokument ist insbesondere ein Verfahren zum formschlüssigen Einschrumpfen eines zylinderischen Keramikteils in Form eines Pumpenkolbens in einen Flansch aus einem Eisenwerkstoff bekannt, wobei es die Aufgabe dieses bekannten Verfahrens war, den Keramikkolben in die mit dem Antrieb verbundene Halterung aus Stahl derart zu verbinden, daß die auf den Keramikkolben in axialer Richtung wirkenden hohen Kräfte, die in Folge hoher Frequenz der Hin- und Herbewegung auftreten, wenn beispielsweise der Keramikkörper als Kolben einer Hochdruckpumpe Verwendung findet, widerstehen können.

Zusammengesetzte Formteile dieser Art sind seit langem bekannt und werden in vielen Bereichen der Technik benötigt, um beispielsweise als axial belastbare Gleitlager ausgebildet im Bereich hoher Prozeßtemperaturen eingesetzt werden zu können. Typische Anwendungsgebiete sind beispielsweise Pumpen oder Rührer in sogenannten Bioreaktoren, oder Pumpen im Bereich der Chemie, die bei hohen Prozeßtemperaturen und hohen Temperaturgradienten leckfrei arbeiten müssen. Um den metallischen Körper kraftschlüssig mit dem keramischen Körper verbinden zu können, werden beide Körper zunächst mittels Wärme behandelt, wobei der keramische Körper dann in der Regel im wärmebehandelten Zustand in ein entsprechendes, im metallischen Körper ausgebildetes Aufnahmeloch eingesetzt wird. Nachfolgend werden beide zusammengesetzten Körper einem Abkühlungsprozeß unterworfen, wobei die Körper in vorbestimmtem Maße schrumpfen, so daß infolgedessen der metallische Körper den keramischen Körper kraftschlüssig unterhalb einer vorgegebenen Abkühlungstemperatur einschließt.

Es hat sich jedoch gezeigt, daß infolge hoher Prozeßtemperaturen, bei denen derartige Körper beispielsweise als Lager dienen, bisweilen kurzfristig in den Bereich der Temperatur gelangen können, in denen die formschlüssige Verbindung der beiden Körper erfolgt. Die Folge ist ein Lösen der kraftschlüssigen Verbindung mit einer verheerenden Folge für das Lager, wobei die Folge in der Regel eine totale Zerstörung des Lagers ist. Man hat dieses gravierende Problem damit zu beheben versucht, daß man den im metallischen Körper aufgenommenen keramischen Körper mit mechanischen Mitteln, beispielsweise Zapfen, Ringen bzw. an der äußeren Kontur des keramischen Körpers ausgebildeten Widerlagern in Form von Vorsprüngen oder Vertiefungen versah, die in entsprechende Vertiefungen und Vorsprünge, die im metallischen Körper ausgebildet sind, eingreifen. Alle diese Maßnahmen führten jedoch dazu, daß der keramische Körper aufgrund der damit naturgemäß verbundenen ungleichmäßig auf ihn einwirkenden Druckbelastung in zunehmenden Maße anfällig für eine totale Zerstörung infolge Bruchs oder Abbrechens bestimmter Teile wurde, so daß dieser Weg keinen nennenswerten Erfolg brachte.

Es ist Aufgabe der vorliegenden Erfindung, ein Formteil der eingangs genannten Art zu schaffen, das auch gegenüber hohen Prozeßtemperaturen ausreichend widerstandsfähig ist, das seine kraftschlüssige Verbindung über einen weiten Temperaturbereich von Raumtemperatur bis wenigstens 350° C mühelos ohne Einschränkung seiner Funktion aufrechterhält, das seine Funktion ebenfalls bei in diesem Temperaturbereich auftretenden großen Temperaturgradienten standhält, das einfach und kostengünstig herstellbar ist und keine zusätzlichen Maßnahmen zur Schaffung einer kraftschlüssigen Verbindung zwischen dem metallischen Körper und dem keramischen Körper fordert.

Gelöst wird die Aufgabe gemäß der Erfindung dadurch, daß das Formteil insbesondere zur Anwendung als axial belastbares Gleitlager dient, und eine am Boden der Öffnung im metallischen Körper ausgebildete, zum ersten Steg im wesentlichen parallele, umlaufende Nut, die mit ihrem Nutboden und der dem Nutboden benachbarten Begrenzungsfläche des metallischen Körpers einen zweiten Steg bildet, wobei der Winkel α zwischen dem Boden der Öffnung und dem angrenzenden ersten Steg < 90° groß ist.

Der wesentliche Vorteil der Erfindung besteht darin, daß eine dauerhafte temperaturbelastbare Verbindung zwischen Körpern unterschiedlicher Wärmeausdehnung geschaffen wird, wobei durch geeignete Wahl der Tiefe der Nut und der Breite des zweiten Stegs der vordere erste Steg zur Aufnahme des keramischen Körpers auf vorbestimm- bzw. berechenbare Weise elastisch bleibt, und zwar über den gesamten Arbeitstemperaturbereich des Formteils.

Durch den vorbestimmbaren, berechenbaren Winkel α ist die lichte Öffnungsweite des metallischen Körpers kleiner als das entsprechende Abmaß des in diese Öffnung einzusetzenden bzw. in dieser aufzunehmenden keramischen Körpers ist. Infolge der Wärmebehandlung wenigstens des metallischen Körpers wird jedoch bei Erreichen der Verbindungsnenntemperatur die lichte Weite der Öffnung derart groß, daß der keramische Körper in diese Öffnung eingesetzt werden kann.

Es hat sich als vorteilhaft herausgestellt, für bestimmte Anwendungsfälle den Winkel α im Bereich von 87° auszubilden.

Grundsätzlich kann das Formteil beliebig geeignet ausgebildet sein, was gleichermaßen für den metallischen und den keramischen Körper gilt. So kann beispielsweise der metallische und keramische Körper beliebig eckig, unregelmäßig oder regelmäßig in bezug auf seine äußeren Konturen ausgebildet sein. Das erfindungsgemäße Prinzip funktioniert unter Berücksichtigung der lösungsgemäßen Erfordernisse gleichermaßen bei allen Formgebungen der Körper bzw. des daraus gebildeten Gesamtkörpers. Es hat sich jedoch als vorteilhaft herausgestellt, beide Körper um eine Körperachse rotationssymmetrisch auszubilden, wobei eine derartige Ausgestaltung in der Regel bei den eingangs erwähnten axial belastbaren Gleitlagern gewählt wird. Jeder Körper ist somit im wesentlichen zylindrisch ausgebildet.

Nicht nur, wie im Zusammenhang mit dem geringfügig verjüngten ersten Steg schon erwähnt, gilt grundsätzlich, daß vorteilhafterweise die Öffnung des metallischen Körpers vor der Verbindung mit dem keramischen Körper kleiner als das in die Öffnung einzusetzende, entsprechend ausgebildete Teil des keramischen Körpers ist.

Bei einer weiteren vorteilhaften Ausgestaltung des Formteils wird der metallische Körper zur Schaffung der kraftschlüssigen Verbindung vor Einfügung des keramischen Körpers in die Öffnung auf wenigstens 550° erwärmt, was eine ausreichende Ausdehnung des metallischen Körpers zur Folge hat, so daß der nicht erwärmte keramische Körper problemlos in die Öffnung eingesetzt werden kann.

Es ist vorteilhafterweise auch möglich, sowohl den metallischen Körper als auch den keramischen Körper zu Schaffung der kraftschlüssigen Verbindung vor Einfügen des keramischen Körpers in die Öffnung auf wenigstens 600° C zu erwärmen, so daß ebenfalls die Öffnung ausreichend erweitert wird und der erwärmte keramische Körper in den erwärmten metallischen Körper in dessen Öffnung eingesetzt werden kann.

Die Erfindung wird nun unter Bezugnahme auf die nachfolgenden schematischen Zeichnungen anhand zweier Ausführungsbeispiele beschrieben. Darin zeigen:
- Fig. 1: in der Seitenansicht im Schnitt ein Formteil aus einem keramischen Körper und einem metallischen Körper in kraftschlüssig verbundenem Zustand,
- Fig. 2: einen Ausschnitt des in Fig. 1 dargestellten Formteils im Schnitt in vergrößerter Darstellung und
- Fig. 3: einen Ausschnitt des in Fig. 1 dargestellten Formteils im Schnitt in vergrößerter Darstellung, jedoch mit aus der Öffnung des metallischen Körpers entferntem keramischen Körper.

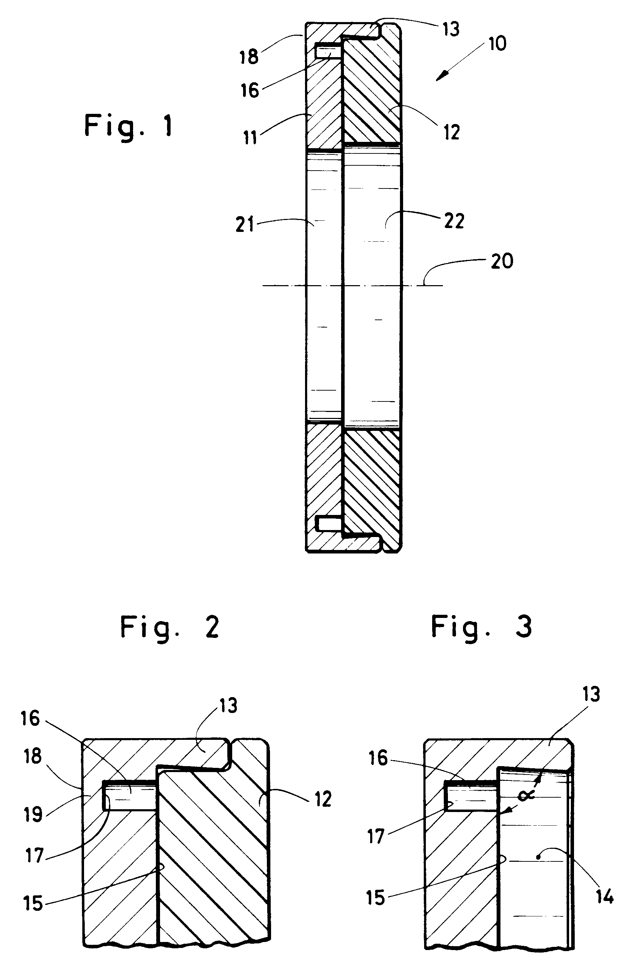

Das in Fig. 1 dargestellte Formteil 10 besteht aus zwei im wesentlichen rotationssymmetrischen, im wesentlichen zylindrisch ausgebildeten metallischen und keramischen Körpern 11, 12. Sowohl der metallische Körper 11 als auch der keramische Körper 12 weisen zur Körperachse 20 axiale Öffnungen 21, 22 auf, die hier nicht gesondert dargestellten Wellen bzw. Lagern dienen. Der metallische Körper 11 weist einen durch seine äußere Kontur begrenzten, vom Körper 11 im wesentlichen rechtwinklig vorstehenden ersten Steg 13 auf, wodurch eine rezeßartig begrenzte Öffnung 14, vgl. Fig. 3, gebildet wird. Der Boden 15 der Öffnung 14 bildet eine rechtwinklige Ebene zur Körperachse 20. Am Boden 15 der Öffnung 14 ist eine im wesentlichen zum ersten Steg 13 parallele, umlaufende Nut 16 ausgebildet. Die Nut 16 weist einen im wesentlichen rechteckigen Querschnitt auf. Der Nutboden 17 und die dem Nutboden 17 benachbarte Begrenzungsfläche 18 des metallischen Körpers 11 bildet einen zweiten Steg 19. Die Begrenzungsfläche 18 ist hier ebenfalls wie der Boden 15 in Form einer ebenen Fläche ausgebildet, die ebenfalls rechtwinklig zur Körperachse 20 ausgerichtet ist.

Aus den Fig. 2 und 3 ist deutlich ersichtlich, daß der Winkel α zwischen dem Boden 15 der Öffnung 14 und dem angrenzenden Steg 13 < 90° ist, d. h. im vorliegenden Fall 87°. Die Nut 16 ist geringfügig gegenüber der durch den ersten Steg 13 gebildeten Begrenzungswand der Öffnung 14 auf die Körperachse 20 zu versetzt ausgebildet.

Die hier kreisförmig ausgebildete Öffnung 14 weist eine lichte Öffnungsweite auf, die kleiner als das in die Öffnung 14 einzusetzende Teil des keramischen Körpers 12 ist, wenn vor der kraftschlüssigen Verbindung beider Teile 11, 12 die Körper sich auf Raumtemperatur befinden.

Es ist möglich, beide Körper 11, 12 auf unterschiedliche Weise zur Schaffung einer kraftschlüssigen Verbindung miteinander zu verbinden. Dieses kann zum einen dadurch geschehen, daß lediglich der metallische Körper 11 zur Schaffung der kraftschlüssigen Verbindung vor der Einfügung des keramischen Körpers 12 in die Öffnung 14 auf wenigstens 550° erwärmt wird oder auch dadurch, daß sowohl der metallische Körper 11 als auch der keramische Körper 12 vor Einfügung des keramischen Körpers 12 in die Öffnung auf wenigstens 600° C erwärmt werden.

Im folgenden werden zwei Beispiele angeführt, wobei der metallische Körper 11 beispielsweise aus dem Werkstoff 1.4571 besteht.

| | | |
|---|---|---|
| Beispiel: | Außendurchmesser: | 70 mm |
| | Breite: | 9,8 mm |
| | Nuttiefe: | 3,5 mm |
| | Steg: | 1,4 mm |
| | Rezess-Tiefe: | 4,9 mm |
| | Winkel: | 3° |

Der Keramikkörper besteht beispielsweise aus SiSiC, SiC, Al₂O₃ oder anderen Verbindungen mit gegenüber dem metallischen Körper 11 geringfügig reduziertem Außendurchmesser.

### Verfahren 1

Betriebstemperatur 350° C
Erwärmungstemperatur 600° C - 650° C.

Zwischen 650° C und 350° C liegt die Temperatur, an dem Kraftschluß erreicht ist, wenn der keramische Körper und der metallische Körper erwärmt werden sollen. Hierbei entsteht ein Spiel zwischen 50» - 100» zum Zusammenfügen beider Körper. Die zusammen erwärmten Körper verbinden sich und sind nach dem Erkalten im Bereich von 20° C - 350° C fest miteinander verbunden.

### Verfahren 2

Betriebstemperatur 350° C
Erwärmungstemperatur 550° C

Bei der Vorgabe - erwärmter metallischer Körper und kalter keramischer Körper - wird der metallische Körper auf 550° C erwärmt. Der kalte keramikische Körper wird bei dieser Temperatur eingefügt. Das größte Spiel bei diesem Vorgang beträgt 140». Beim nachfolgenden Schrumpfungsprozeß entsteht ebenfalls eine feste Verbindung über einen Betriebsbereich von 20° C bis 350° C.

### Bezugszeichenliste

- 10: Formteil
- 11: metallischer Körper
- 12: keramischer Körper
- 13: erster Steg
- 14: Öffnung
- 15: Boden
- 16: Nut
- 17: Nutboden
- 18: Begrenzungsfläche
- 19: zweiter Steg
- 20: Körperachse
- 21: Öffnung
- 22: Öffnung

## Patentansprüche

1. Formteil, umfassend einen metallischen Körper (11) und einen keramischen Körper (12), die mittels Wärmebehandlung kraftschlüssig miteinander verbunden sind, wobei vor der Schaffung der kraftschlüssigen Verbindung wenigstens der metallische Körper (11) erwärmt wird, und der metallische Körper (11) einen durch einen die äußere Körperkontur begrenzenden, vom Körper (11) im wesentlichen rechtwinklig wegstehenden ersten Steg (13) aufweist, der eine Öffnung (14) zur Aufnahme des keramischen Körpers (12) begrenzt, dadurch gekennzeichnet, daß das Formteil (10) insbesondere zur Anwendung als axial belastbares Gleitlager dient, und eine am Boden (15) der Öffnung (14) im metallischen Körper (11) ausgebildete, zum ersten Steg im wesentlichen parallele, umlaufende Nut vorgesehen ist, die mit ihrem Nutboden (17) und der dem Nutboden (17) benachbarten Begrenzungsfläche (18) des metallischen Körpers (11) einen zweiten Steg (19) bildet, wobei der Winkel α zwischen dem Boden (15) der Öffnung (14) und dem angrenzenden ersten Steg (13) < 90° ist.

2. Formteil nach Anspruch 1, dadurch gekennzeichnet, daß der Winkel α 87° beträgt.

3. Formteil nach einem oder beiden der Ansprüche 1 oder 2, dadurch gekennzeichnet, daß beide Körper (11, 12) um eine Körperachse (20) rotationssymmetrisch ausgebildet sind.

4. Formteil nach einem oder mehreren der Ansprüche 1 bis 3, dadurch gekennzeichnet, daß die Öffnung (14) des metallischen Körpers (11) vor der Verbindung mit dem keramischen Körper (12) kleiner als das in die Öffnung (14) einzusetzende, entsprechend ausgebildete Teil des keramischen Körpers (12) ist.

5. Formteil nach einem oder mehreren der Ansprüche 1 bis 4, dadurch gekennzeichnet, daß der metallische Körper (11) zur Schaffung der kraftschlüssigen Verbindung vor Einfügung des keramischen Körpers (12) in die Öffnung (14) auf wenigstens 550° C erwärmt wird.

6. Formteil nach einem oder mehreren der Ansprüche 1 bis 4, dadurch gekennzeichnet, daß sowohl der metallische Körper (11) als auch der keramische Körper (12) zur Schaffung der kraftschlüssigen Verbindung vor Einfügung des keramischen Körpers (12) in die Öffnung (14) auf wenigstens 600° C erwärmt werden.

## Claims

1. Assembly, comprising a metallic body (11) and a ceramic body (12), which are joined in an interference fit by means of heat treatment, where prior to the creation of the interference fit at least the metallic body (11) is heated and the metallic body (11) possesses a first fin (13) forming the external body contour and standing substantially at right angles away from the body (11), which defines an opening (14) for retaining the ceramic body, characterized in that the assembly (10) may be used in particular as an axially loadable sliding bearing and is provided with a circumferential notch formed at the base (15) of the opening (14) in the metallic body (11), running substantially parallel to the first fin, which forms a second fin (19) with its notch base (17) and the periphery (18) of the metallic body bordering the notch base (17), such that the angle α between the base (15) of the opening (14) and the first fin (13) bordering it is < 90°.

2. Assembly according to Claim 1, characterized in that the angle α is 87°.

3. Assembly according to one or both of Claims 1 and 2, characterized in that both bodies (11,12) are formed in a manner which is rotationally symmetrical about a body axis (20).

4. Assembly according to one or more of Claims 1 to 3, characterized in that the opening (14) of the metallic body (11) prior to joining with the ceramic body (12) is smaller than the corresponding projecting part of the ceramic body (12) which is to be placed in the opening (14).

5. Assembly according to one or more of Claims 1 to 4, characterized in that in order to create the interference fit the metallic body (11) is heated to at least 550° C prior to insertion of the ceramic body (12) into the opening (14).

6. Assembly according to one or more of Claims 1 to 4, characterized in that in order to create the interference fit both the metallic body (11) and the ceramic body (12) are heated to at least 600 °C prior to insertion of the ceramic body (12) into the opening (14).

## Revendications

1. Pièce préformée, incluant un élément métallique (11) et un élément céramique (12) qui sont reliés l'un à l'autre par liaison positive au moyen d'un traitement thermique, dans laquelle au moins l'élément métallique (11) est chauffé avant la réalisation de la liaison positive et dans laquelle l'élément métallique (11) présente un premier rebord (13) s'étendant à partir de l'élément (11) dans une direction sensiblement perpendiculaire et se limitant au contour extérieur dudit élément, ledit rebord (13) délimitant un évidement (14) pour logement de l'élément céramique (12), caractérisée en ce que la pièce préformée (10) sert en particulier pour une utilisation en tant que palier lisse pouvant supporter une charge axialement, et en ce qu'est prévue une gorge périphérique réalisée dans le fond (15) de l'évidement (14) de l'élément métallique (11) qui est sensiblement parallèle au premier rebord, laquelle gorge forme un second rebord (19) avec son fond de gorge (17) et les surfaces de délimitation (18) de l'élément métallique (11) voisines du fond de gorge (17), l'angle α entre le fond (15) de l'évidement (14) et le premier rebord (13) qui lui est contigu, étant inférieur à 90°.

2. Pièce préformée selon la revendication 1, caractérisée en ce que l'angle α est de 87°.

3. Pièce préformée selon la revendication 1 ou 2, caractérisée en ce que les deux éléments (11, 12) sont réalisés de façon symétrique de révolution autour d'un axe (20).

4. Pièce préformée selon l'une des revendications 1 à 3, caractérisée en ce que, l'évidement (14) de l'élément métallique (11) est plus petit vers l'avant de la liaison avec l'élément céramique (12) que ne l'est la partie correspondante de l'élément céramique (12) devant être insérée dans l'évidement (14).

5. Pièce préformée selon l'une ou plusieurs des revendications 1 à 4, caractérisée en ce que, en vue de la réalisation de la liaison positive, l'élément métallique (11) est chauffé au moins à 550°C avant insertion de l'élément céramique (12) dans l'évidement (14).

6. Pièce préformée selon l'une ou plusieurs des revendications 1 à 4, caractérisée en ce que, en vue de la réalisation de la liaison positive, aussi bien l'élément métallique (11) que l'élément céramique (12) sont chauffés au moins à 600°C, avant insertion de l'élément céramique (12) dans l'évidement (14).
